# EUROPÄISCHE PATENTANMELDUNG

(11) **EP 0 873 035 A2**
(43) Veröffentlichungstag der Anmeldung: **21.10.1998**
(21) Anmeldenummer: 98201120.7
(22) Anmeldetag: 08.04.1998
(51) Int. Cl.: H04Q 11/04, H04L 12/433

(54) **Lokales Netzwerk mit Umsetzmitteln**

(30) Priorität: 16.04.1997 DE 19715799
(71) Anmelder: Philips Patentverwaltung GmbH, 22335 Hamburg (DE); Koninklijke Philips Electronics N.V., 5621 BA Eindhoven (NL)
(72) Erfinder: Du, Yongang, Dr.-Ing., Röntgenstrasse 24, 22335 Hamburg (DE); Van Wageningen, Andries, Dipl.-Ing., Röntgenstrasse 24, 22335 Hamburg (DE); Kraemer, Rolf, Dr.-Ing., Röntgenstrasse 24, 22335 Hamburg (DE)
(74) Vertreter: Volmer, Georg, Dipl.-Ing.

(57) **Zusammenfassung**

Die Erfindung betrifft ein lokales, nach dem asynchronen Transfermodus (ATM) arbeitendes Netzwerk, insbesondere uni- oder bidirektionales Ringnetzwerk, mit mehreren Stationen (1-4) und diesen und/oder weiteren Netzwerken mit weiteren Stationen (9-11) zugeordneten Netzwerkschnittstellen (Transceiver) (5-8), die jeweils einen Sende- und Empfangs-Ringanschluß aufweisen, wobei der Verbindungsaufbau, der Informationsaustausch während der Verbindung und der Verbindungsabbau digital über den Austausch von ATM-Zellen erfolgt, in deren Kopffeld (header) logische Verbindungskennungen (VPI, virtual path identifier und VCI, virtual channel identifier) niedergelegt sind. Zur Vereinfachung und Optimierung der netzwerkinternen Kommunikation ist erfindungsgemäß vorgesehen, daß der mindestens einen Netzwerkschnittstelle (5) Umsetzungsmittel zugeordnet sind zum mindestens teilweisen und reversiblen Umsetzen von verfügbaren Datenbytes im Kopffeld der ATM-Zelle in eine netzwerkspezifische Kennung.

## Beschreibung

Die Erfindung betrifft ein lokales, nach dem asynchronen Transfermodus (ATM) arbeitendes Netzwerk, insbesondere ein uni- oder bidirektionales Ringnetzwerk, mit mehreren Stationen und diesen und/oder weiteren Netzwerken mit weiteren Stationen zugeordneten Netzwerkschnittstellen (ATM-Transceiver), die jeweils einen Sende- und Empfangs-Ringanschluß aufweisen, wobei der Informationsaustausch digital über ATM-Zellen erfolgt, in deren Kopffeld (header) Adressinformationen, insbesondere Bündelkennungen (VPI, virtual path identifier) und Verbindungkennungen (VCI, virtual channel identifier), niedergelegt sind. Die Erfindung betrifft darüber hinaus eine für die Verwendung in einem solchen Netzwerk geeignete ATM-Zelle sowie eine Netzwerkschnittstelle für ein solches lokales Netzwerk und schließlich eine stapelbare ATM-Einheit bestehend aus einer Vielzahl von Netzwerkschnittstellen zum Aufbau einer Vermittlungseinrichtung (Switch).

In einem lokalen Netzwerk, welches nach dem asynchronen Transfermodus (ATM) arbeitet, werden aus den zu übertragenden Informationen (Nachrichten) Blöcke fester Länge gebildet. Jeder Block wird mit einer zusätzlichen Steuerinformation zu einer Übertragungseinheit ergänzt, die als ATM-Zelle bezeichnet sind. Eine ATM-Zelle setzt sich somit zusammen aus einem Zellenkopf (header) und einem Informationsfeld (payload), in dem die zu übertragenden Informationen enthalten sind.

Die ATM-Technik findet Einsatz bei unterschiedlichen Übermittlungsdiensten, wie Datenübermittlungsdiensten, Sprachübermittlungsdiensten, Videodiensten (z.B. Videokonferenzen, Videodatenbanken) oder bei der Übermittlung von Multimedia-Informationen, bei denen Sprachen-, Daten- und Videoinformationen miteinander kombiniert sind. Dabei kann ein ATM-Netz sowohl privat als auch öffentlich sein.

Ein öffentliches ATM-Netz ist z.B. das B-ISDN-Netz (broadband integrated service digital network). Private bzw. öffentliche ATM-Netze können aufgrund des vorgegebenen ATM-Standards miteinander verbunden werden.

Bei ATM werden auf jedem Ubertragungsabschnitt ununterbrochen Zellen übertragen. Ist gerade keine Nutzinformation zu senden, so werden speziell markierte Leerzellen gesendet. Damit werden die ATM-Nutzzellen zeitlich voneinander unabhängig übertragen, da die zeitlichen Abstände auf der Leitung zwischen benachbarten Nutzzellen in der Regel unterschiedlich sind. Diese Art der Übertragung bezeichnet man daher als asynchron. Damit stellt ATM eine asynchrone Übertragung von Nutzzellen fester Länge dar.

Bei den Nutzzellen wird unterschieden zwischen Anwenderzellen (user cells), die in ihrem Informationsfeld z.B. Nachrichten oder Daten des Benutzers einer zuvor aufgebauten Verbindung enthalten, und Kontrollzellen (signalling cells), die in ihrem Informationsfeld Steuerungsinformationen, z.B. für die Steuereinheit einer Netzwerkschnittstelle, enthalten.

Bei ATM-Netzen wird die verfügbare Übertragungskapazität (Bandbreite) eines Breitbandkanals in sog. virtuelle Pfade (virtual path) unterteilt. Ein virtueller Pfad repräsentiert wiederum eine Gruppe von virtuellen Kanälen (virtual channel). Beim Aufbau einer virtuellen Verbindung zwischen einem Sender und einem Empfänger wird zunächst der geeignete virtuelle Pfad ausgewählt. Anschließend wird ein Teil der Bandbreite als virtueller Kanal dieses Pfades belegt. Für die Identifizierung des virtuellen Kanals wird die Kennung VCI (virtual channel identifier) verwendet. Für die Identifizierung der Pfade wird die Kennung VPI (virtual path identifier) verwendet. Damit läßt sich jede übertragene Zelle eindeutig zuordnen, da die Kombination VPI&VCI die logische Kennung für die festgelegte Verbindung darstellt.

Darüber hinaus wird unterschieden zwischen einer Einzelverbindung (unicast connection), die zwischen einem einzigen Anwender einer ersten Station und einem Anwender einer zweiten Station aufgebaut wird. Wenn der Verbindungsaufbau zwischen einem ersten und mehreren weiteren Anwendern erfolgt, bezeichnet man die Verbindung als Mehrfachverbindung (multicast connection). Wenn es sich bei einer solchen Mehrfachverbindung um eine beliebige Anzahl von weiteren Anwendern handelt, spricht man von einer Verteilverbindung (broadcast connection).

Aus der EP 0 614 296 A2 ist ein lokales ATM-Netzwerk der eingangs genannten Art bekannt, bei welchem als Nutzzellen sowohl Anwenderzellen als auch Kontrollzellen verarbeitet werden. Jeder Netzwerkschnittstelle ist dabei eine Station zugeordnet. Die Anwenderzellen enthalten dabei die eigentliche Information, z.B. Nachrichten oder Daten des Benutzers dieser Verbindung. Wenn eine virtuelle Verbindung beispielsweise zur Übertragung von Sprachsignalen (Telefongespräch) benutzt wird, enthält das Informationsfeld der Anwenderzelle Sprachdaten. Demgegenüber enthält eine Kontrollzelle in ihrem Informationsfeld Steuerungsinformationen, die beispielsweise für die ringinterne Koordination der Vermittlungsfunktion benötigt werden, insbesondere um eine Verbindung aufzubauen oder nach der Informationsübertragung wieder abzubauen. Andererseits werden auch Kontrollzellen benötigt, um Steuerungsinformationen zwischen einer Station und dem Netz zu übertragen. In einem solchen Fall hat die Kontrollzelle einen vom UNI/NNI vorgeschriebenen standardisierten Aufbau.

Bei einem solchen bekannten Netzwerk erfolgt der Verbindungsaufbau folgendermaßen:

Bei einem Verbindungswunsch einer Sendestation mit mindestens einer Empfangsstation wird zuerst wenigstens eine Kontrollzelle mit einer Abfrage über den Zustand der Empfangsstation erzeugt. Die mindestens eine Empfangsstation sendet nach Empfang der Abfrage wenigstens eine Kontrollzelle mit der Information über ihren Zustand. Die Sendestation bildet nach Empfang der Zustandsinformation wenigstens eine Kontrollzelle zum Verbindungsaufbau, wenn der Zustand der mindestens einen Empfangsstation eine Verbindung ermöglicht. Anschließend erfolgt der Verbindungsaufbau und die Übertragung der Information. Der Abbau der Verbindung erfolgt in umgekehrter Reihenfolge.

Aus der US 5 600 795 ist ein nach dem asynchronen Transfermodus ATM arbeitendes lokales Netzwerk bekannt, bei dem der Verbindungsaufbau in ähnlicher Weise dadurch erfolgt, daß zunächst eine einer Sendestation zugeordnete Steueranordnung, eine von der Sendestation gelieferte Kontrollzelle mit einem durchführbaren Wunsch für eine Einzel- (unicast) oder Mehrfachverbindung (multicast/broadcast) eines Anwenders der Sendestation empfängt. Anschließend erfolgt das Aussenden der Kontrollzelle zu einem Anwender wenigstens einer Empfangsstation, wobei die Kontrollzelle in ihrem Informationsfeld wenigstens eine Information über die Anwender, die Adresse der Sendestation und eine anwenderbezogene Kennung für die Rückverbindung enthält. In einer der Empfangsstationen zugeordneten Steueranordnung erfolgt nach Empfang der von der Sendestation gelieferten Kontrollzelle die Erzeugung einer zur Sendestation zu sendenden Kontrollzelle, die in ihrem Informationsfeld wenigstens eine Angabe über die Adresse der zugeordneten Empfangsstation und eine anwenderbezogene Kennung für die Hinverbindung enthält. Auch bei diesem Netzwerk ist jeder Station eine eigene Netzwerkschnittstelle zugeordnet.

Aus "Telekommunkation aktuell, ATM Anwendungen, Multimediakommunikation über Datenautobahnen, VDE Verlag GmbH 1995", Seiten 11-16, ist der grundsätzliche Aufbau von ATM-Zellen nach dem vorgeschriebenen ATM-Standard bekannt. Demnach besteht die ATM-Zelle aus einem Informationsteil einer Länge von 48 Byte und einem Kopfteil (header) einer Länge von 5 Byte. Der Zellenkopf ist dabei unterschiedlich strukturiert, je nachdem, ob es sich um eine ATM-Zelle handelt, die über eine Schnittstelle zwischen einer Station und dem Netzwerk (UNI, user network interface) oder zwischen zwei unterschiedlichen Netzwerken (NNI, network network interface) übertragen wird.

Wenn es sich um eine UNI-Nutzzelle handelt, bilden die ersten 4 Bit des Zellenkopfes die GFC-Funktion (generic flow control). Diese ermöglicht es, Überlastsituationen im Netz aufgrund der Überschreitung vorgegebener Bandbreiten zu verhindern. Anschließend folgt eine Bitfolge von 8 Bit VPI und 16 Bit VCI zur Definition des virtuellen Kanals bzw. des virtuellen Pfades. Die nachfolgenden Informationen der Kopfzelle beziehen sich auf die Art der Zelle (PT, payload type), mit der in diesem Stand der Technik unterschieden wird zwischen Anwenderzellen und Kontrollzellen. Weitere Informationen werden durch die Zellenverlustpriorität (CLP, cell loss priority) und die Zellenkopfprüfsumme (HEC, header error control) vorgenommen. Die letztgenannten Bereiche PT, CLP, HEC sind bei UNI/NNI-Zellen identisch. Demgegenüber unterscheidet sich die NNI-Zelle von der UNI-Zelle dadurch, daß anstelle des bei der UNI-Zelle vorgesehenen GFC-Bereiches der Bereich für die Pfadkennung (VPI) von 8 auf 12 Bit ausgedehnt ist.

Der Erfindung liegt die Aufgabe zugrunde, ein Netzwerk bzw. eine Netzwerkschnittstelle der eingangs genannten Art sowie eine für die Verwendung in einem solchen Netzwerk geeignete ATM-Zelle dahingehend weiterzuentwickeln, daß die ringinterne Kommunikation vereinfacht wird, ohne daß der ringextern festgelegte Standard verletzt wird.

Diese Aufgabe wird bei einem Netzwerk bzw. einer Netzwerkschnittstelle der eingangs genannten Art dadurch gelöst, daß der mindestens einen Netzwerkschnittstelle Umsetzungsmittel zugeordnet sind zum mindestens teilweisen und reversiblen Umsetzen von verfügbaren Datenbytes im Kopffeld der ATM-Zelle in eine netzwerkspezifische Kennung.

Bei einer ATM-Zelle zur Verwendung in einem Netzwerk der eingangs genannten Art erfolgt die erfindungsgemäße Lösung dadurch, daß ihr eine einen Port Extender bildende Multiplexer-/Demultiplexereinrichtung zugeordnet ist, über die der Datentransfer zu mehreren an Anschluß-Ports angeordneten Stationen erfolgt.

Die Erfindung zeichnet sich prinzipiell gegenüber dem Stand der Technik dadurch aus, daß durch die Umsetzung der verfügbaren Datenbytes innerhalb der Header-Bit der ATM-Zelle in die netzwerkspezifische Kennung ein sehr viel flexiblerer Datentransfer innerhalb des Netzwerkes erfolgen kann. Die erfindungsgemäße Lösung beruht auf dem Ansatz, daß eine Standardisierung gemäß dem UNI/NNI Standard nur dort beibehalten werden muß, wo dies aufgrund der Umgebungsbedingungen erforderlich ist.

Innerhalb des Netzwerkes, also vom Netzwerk aus gesehen diesseits der Schnittstellen zu den Stationen muß demgegenüber der vorgeschriebene Standard nicht eingehalten werden. Vielmehr kann hier ein systemspezifisches Header-Format verwendet werden. Beide der genannten Formate unterscheiden sich in der Bedeutung der Header-Bit, jedoch nicht in der Länge des Headers. Beim Eintritt in das Netzwerk wird somit erfindungsgemäß der dem UNI/NNI Standard entsprechende Header in die netzwerkspezifischen Header-Bit übersetzt. Umgekehrt wird, wenn die Zelle das Netzwerk verläßt, deren Header in das UNI/NNI spezifische Format rücktransformiert. Die Auswahl der für die ringspezifische Kennung verwendeten Header-Bit ist dabei frei wählbar.

Dadurch, daß bevorzugt die Umsetzungsmittel eine während der Gesprächsaufbauphase bzw. während der Gesprächsabbauphase aktualisierte Kopffeld-Übersetzungstabelle (header translation table) beinhalten derart, daß mindestens ein Teil des nicht durch die standardisierte VPI&VCI Bitfolge belegten Kopffeldbereichs mit der netzwerkspezifischen Kennung überschreibbar ist, ergibt sich eine einfache Anpassungsmöglichkeit. Dabei wird die Kopffeld-Übersetzungstabelle während der Signalisierung (Gesprächsaufbau) so definiert, daß einerseits die VPI&VCI Bitfolge für die Verbindungskennung erhalten bleibt und daß andererseits die gewünschten netzwerkspezifischen Informationen in der Kennung berücksichtigt werden. Ein erster Teilabschnitt der Kennung kann vorzugsweise zur Unterscheidung von Unicast (Einzelverbindungen), Multicast (Mehrfachverbindungen) und Broadcast (Verteilverbindungen) verwendet werden. Ein anderer, im folgenden weiterer Teilabschnitt II genannter, Abschnitt der netzwerkspezifischen Kennung dient zur Zielangabe der ATM-Zelle, d.h. zur Bestimmung derjenigen Netzwerkschnittstelle, an der die Zielstation angeschlossen ist.

Schließlich können auch Angaben über die Priorität sowie die Eigenschaft einer Zelle (control cell) im netzwerkspezifischen Header-Format niedergelegt sein.

Im Unicastbetrieb befindet sich in dem weiteren Teilabschnitt der netzwerkspezifischen Kennung die Angabe der jenigen Netzwerkschnittstelle, an der die gewünschte Zielstation liegt.

Demgegenüber entspricht im Multicast- oder Broadcastbetrieb die im weiteren Teilbereich der netzwerkspezifischen Kennung abgelegte Information der Adresse der sendenden Netzwerkschnittstelle (Port-ID= SENDER ID). Die ATM-Zelle wird also innerhalb des Netzwerkes von Schnittstelle zu Schnittstelle weitergegeben, bis sie schließlich wieder an ihrem Ausgangangspunkt, d.h. der Sende-Netzwerkschnittstelle ankommt und dort gelöscht wird. Im Broadcastbetrieb braucht dabei keine weitere Unterscheidung getroffen zu werden, da die ATM-Zelle für jede Netzwerkschnittstelle bestimmt ist. Demgegenüber muß im Multicastbetrieb vorab festgelegt sein, ob die ATM-Zelle für die jeweilige Netzwerkschnittstelle bestimmt ist, da sich dort eine zur Verbindung gehörige Station befindet, oder ob die Zelle ohne Übermittlung an die Station an den Ausgang der Netzwerkschnittstelle weitergeleitet wird. Hierzu dient eine Zuordnungstabelle (small broadcast/multicast table), die während der Signalisierungsphase vom sog. Call-Handler anhand der für die Verbindung gewünschten Stationen definiert wird. Diese Zuordnungstabelle am Stationsausgang ist notwendig, weil die zu einer bestimmten Broadcast-/Multicast-Verbindung gehörigen Zellen ein globales, d.h. im wesentlichen identisches, VPI&VCI Muster verwenden. Demgegenüber haben gemäß UNI/NNI Standard unterschiedliche Verbindungsteilnehmer auch unterschiedliche VPI&VCI Werte. Die Zuordnungstabelle (broadcast/multicast table) paßt daher das globale VPI&VCI Muster einer Verbindung im Ringnetzwerk an die teilnehmerspezifischen VPI&VCI Muster gemäß UNI/NNI Standard an. Diese Anpassung erfolgt während der Signalisierungsphase. Die Wirkung dieser Zuordnungstabelle besteht darin, daß ein Löschhinweis für die Zelle aus dieser Tabelle ausgelesen wird für den Fall, daß es sich im Multicastbetrieb um eine Zelle handelt, die nicht zu der zur Netzwerkschnittstelle gehörenden Station gehört.

Eine besondere Ausführungsform der erfindungsgemäßen Lösung besteht darin, daß mindestens eine Netzwerkschnittstelle einen Multiplexer/Demultiplexer aufweist, über welchen mindestens zwei Stationen gemeinsam an der Netzwerkschnittstelle angeschlossen sind. Demgemäß sind jeder Netzwerkschnittstelle nunmehr entsprechend der Vielfachheit des Multiplexers bzw. Demultiplexers mehrere Stationen zugeordnet, die jeweils von der selben Netzwerkschnittstelle aus bedient werden können. Somit weist die Netzwerkschnittstelle die Eigenschaft eines sog. Port Extenders auf, der eine feste Anzahl von Anschluß-Ports für die einzelnen Stationen enthält. Die mit vergleichbar langsamer Geschwindigkeit aus den Stationen eintreffenden Zellen werden durch den Multiplex-Vorgang auf die Hochgeschwindigkeitsverbindung zu den Sende-Ringanschlüssen der Netzwerkschnittstelle transformiert. In umgekehrter Richtung werden die von der Netzwerkschnittstelle eintreffenden Zellen auf die unterschiedlichen Anschluß-Ports für die Stationen im Sinne eines Demultiplexings verteilt. Diese Multiplex- und Demultiplex-Funktion des Port Extenders läßt sich realisieren, ohne daß die oben beschriebene grundsätzliche Aufbauweise der Netzwerkschnittstellen-einrichtung verändert werden muß. Es sind lediglich Maßnahmen zu treffen, um im weiteren Teilbereich der netzwerkspezifischen Kennung ergänzende Informationen zu hinterlegen, aufgrund derer der Tatsache Rechnung getragen wird, daß nunmehr je Netzwerkschnittstelle nicht nur eine sondern über den Port Extender mehrere Stationen angeschlossen sind. Bei dieser Lösung unter Verwendung des Port Extender ist besonders vorteilhaft, daß der UNI/NNI Standard am Eingang bzw. des Ausgangs des Port Extenders vorliegt, d.h. an der Netzwerkschnittstelle dorthin verlagert wird.

Hierzu ist im Fall eines Unicastbetriebs vorgesehen, daß der weitere Teilbereich II der netzwerkspezifischen Kennung aus zwei Bitabschnitten x,y besteht, wobei der eine Bitabschnitt x zur Identifikation der jeweiligen am Multiplexer/Demultiplexer angeschlossenen Anschluß-Ports und der andere Bitabschnitt y zur Identifikation der Netzwerkschnittstelle dient, für die die ATM-Zelle bestimmt ist. Gegenüber dem zuvor beschriebenen Grundsystem ohne Port Extender ist nunmehr der erste Bitabschnitt x ergänzt und der zweite Bitabschnitt y verkürzt. Hierbei handelt es sich um eine weitere Zuordnungstabelle, aus der der Call-Handler die Information erhält, welche Anschluß-Ports an der jeweiligen Netzwerkschnittstelle in welcher Weise adressiert sind. Wenn also im Unicastbetrieb die Sendestation eine bestimmte Empfangsstation auswählt, ist dem Call-Handler über die ihm bekannte Zuordnung die Codierungsinformation für den Bitabschnitt x gegeben. Die Datenbit werden dann so aufgefüllt, daß im x-Bereich die Information für den jeweiligen Anschluß-Port und im y-Bereich die Identifikation der diesen Anschluß-Port beinhaltenden Netzwerkschnittstelle abgelegt ist.

Im Falle eines Multicast-/Broadcastbetriebs ist - wie im Grundsystem ohne Port Extender - der weitere Teilbereich (II) der netzwerkspezifischen Kennung mit der Angabe der sendenden Netzwerkschnittstelle (SENDER-ID) versehen. Auch hierbei läuft die ATM-Zelle somit von Schnittstelle zu Schnittstelle, bis sie schließlich wieder zu ihrem Ausgangspunkt gelangt.

Auch im Broadcastbetrieb ergibt sich bei der Verwendung des Port Extenders kein wesentlicher Unterschied.

Im Multicastbetrieb ist jedoch vorgesehen, daß jede an der Verbindung teilnehmende Netzwerkschnittstelle ein während des Gesprächsaufbaus definiertes Zuordnungsmuster (pattern) für die Auswahl der innerhalb dieser Netzwerkschnittstelle an der Verbindung teilnehmenden Anschluß-Ports aufweist, mit dem netzwerkschnittstellenintern der weitere Teil II der netzwerkspezifischen Kennung jeweils überschrieben wird. Diese Maßnahme trägt dem Umstand Rechnung, daß im Multicastbetrieb einerseits die Information erhalten werden muß, ob die jeweilige Netzwerkschnittstelle überhaupt Anschluß-Ports aufweist, die zu der Verbindung gehörige Stationen versorgen, und, wenn ja, darüber hinaus die weitere Information, welche der Stationen von der Verbindung betroffen sind. Die erste Information ist dabei dem Call-Handler über den Systemaufbau bekannt. Das die zweite Information enthaltende Zuordnungsmuster wird während der Signalisierungsphase entsprechend den an der Verbindung teilnehmenden Stationen festgelegt und dient dann später als Verteilalgorithmus für die eintreffenden Zellen in die Ausgangs-Ports des zugehörigen Port Extenders.

Eine besondere Verwendungsweise findet die erfindungsgemäße Lösung dadurch, daß eine Netzwerkschnittstelle aufgebaut wird, die eine lokale blockierfreie N x N Vermittlungseinheit bildet, wenn die Datenrate der Verbindung zwischen Port Extender und Transceiver größer ist als die Summendatenrate der einzelnen Port-Extender-Ein. bzw. Ausgänge ist.

Die Erfindung wird im folgenden anhand von Zeichnungen näher erläutert. Dabei zeigen:
- Fig. 1: ein lokales, nach dem asynchronen Transfermodus (ATM) arbeitendes Netzwerk, wie es nach seinem grundsätzlichen Aufbau aus dem Stand der Technik bekannt ist,
- Fig. 2: ein anderes, nach seinem grundsätzlichen Aufbau aus dem Stand der Technik bekanntes lokales nach dem asynchronen Transfermodus ATM arbeitendes Netzwerk,
- Fig. 3: ein lokales ATM Netzwerk mit einer Netzwerkschnittstelle, welche einen Port Extender enthält,
- Fig. 4: Erläuterungsskizzen zum Aufbau von ATM-Zellen, wobei
- Fig. 4a: den Gesamtaufbau einer bekannten ATM-Zelle,
- Fig. 4b: den ATM-Zellenkopfbereich nach dem UNI-Standard,
- Fig. 4c: den ATM-Zellenkopfbereich nach dem NNI-Standard und
- Fig. 4d: den grundsätzlichen Aufbau des ATM-Zellenkopfbereichs gemäß Ausführungsbeispiel der Erfindung darstellen,
- Fig. 5: eine Erläuterungsskizze für den ATM-Zellentransfer, und zwar
- Fig. 5a: im Unicastbetrieb des Netzwerkes nach Fig. 1 oder 2,
- Fig. 5b: im Multicast- oder Broadcastbetrieb des Netzwerkes nach Fig. 1 oder 2,
- Fig. 5c: im Unicastbetrieb des Netzwerkes nach Fig. 3,
- Fig. 5d: im Multicastbetrieb des Netzwerkes nach Fig. 3

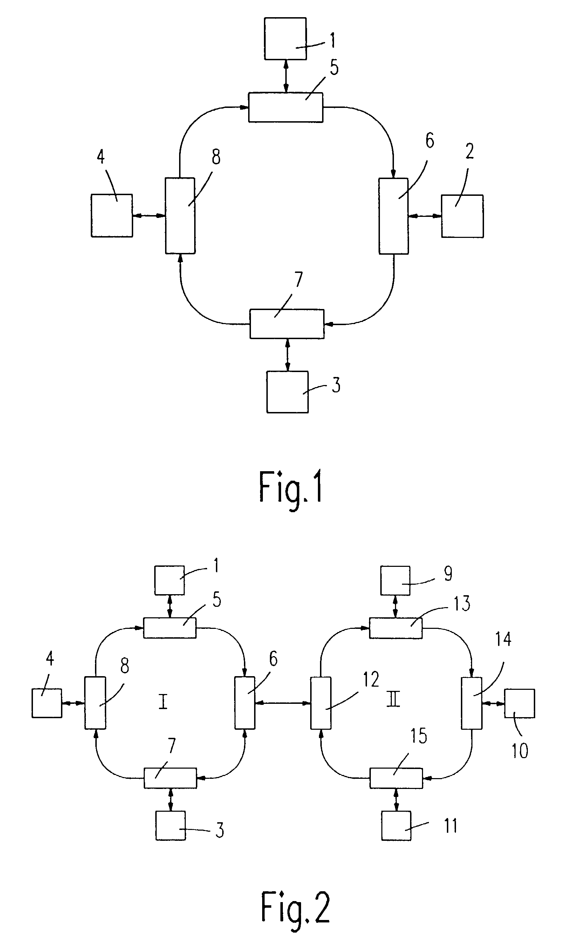

Das in Fig. 1 dargestellte, hinsichtlich seines grundsätzlichen Aufbaus aus dem Stand der Technik bekannte lokale nach dem asynchronen Transfermodus ATM arbeitende Netzwerk sieht vier Stationen 1-4 vor, die über jeweils eine Netzwerkschnittstelle 5-8 an ein Ringnetzwerk angeschlossen sind. Die Datenverbindung zwischen einer der Stationen 1-4 zu einer Empfangsstation innerhalb des Netzwerks erfolgt jeweils nach dem ATM-Übertragungsverfahren. Hierzu weist jede Netzwerkschnittstelle 5-8 Sende- und Empfangsringverbindungen auf, die zur Übertragung von Zellen vorgesehen sind. Jede Netzwerkschnittstelle 5-8 weist eine (nicht näher dargestellte) Koppelvorrichtung auf, die über Pufferspeicher mit den Ringverbindungen und der Station gekoppelt ist und den Zellenstrom weitervermittelt. Einzelheiten des Aufbaus einer solchen Netzwerkschnittstelle sind im Stand der Technik der EP 0 614 296 A2 beschrieben.

Fig. 2 zeigt eine lokale Netzwerkanordnung, die aus zwei lokalen ATM-Netzen I, II besteht. Jedes der Netze weist jeweils mehrere Stationen 1, 3, 4 bzw. 9, 10, 11 auf, die jeweils mit separaten Netzwerkschnittstellen 5, 7, 8 bzw. 13, 14, 15 mit dem zugeordneten Netz verbunden sind. Beide Netze untereinander sind über miteinander gekoppelte Netzwerkschnittstellen 6 bzw. 12 in Verbindung gebracht. Bei solchen gekoppelten Netzen kann die Übertragung der ATM-Zellen beispielsweise von einer Sendestation im Bereich des Netzes I zu einer Empfangsstation im Bereich des Netzes II erfolgen (oder umgekehrt).

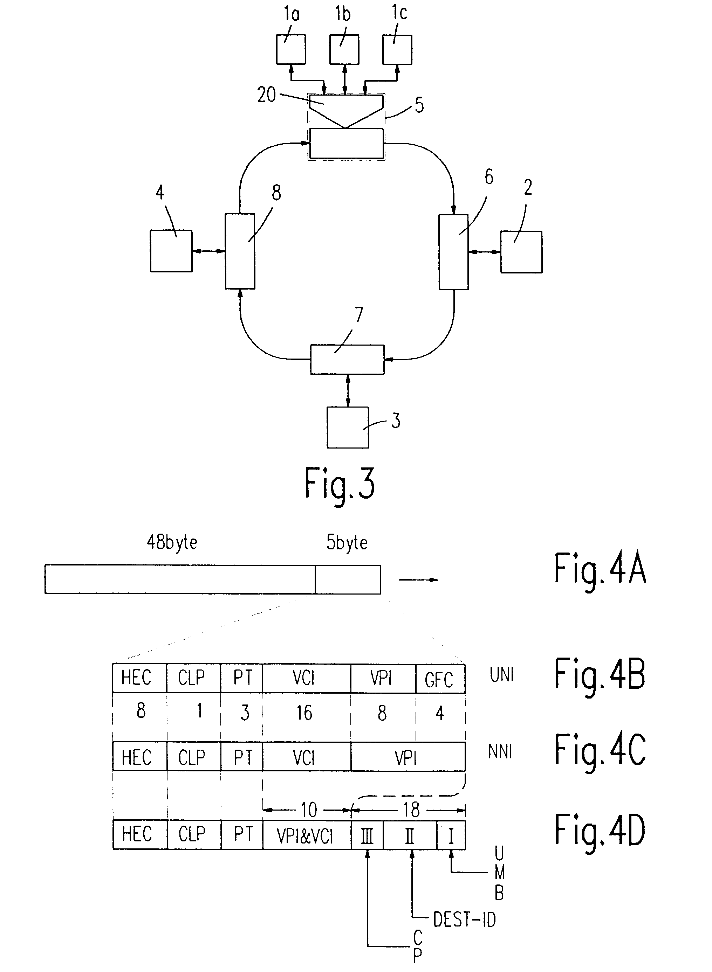

Fig. 3 zeigt den prinzipiellen Aufbau eines weiteren lokalen ATM-Netzes. Im Unterschied zu den in Fig. 1 und 2 dargestellten Netzwerken sind an eine Netzwerkschnittstelle 5 mehrere Stationen 1a,1b,1c angeschlossen. Dazu ist die Netzwerkschnittstelle 5 um einen Multiplexer bzw. Demultiplexer 20 erweitert, die eine Einkopplung der ATM-Zellen aus den parallel an der Netzwerkschnittstelle 5 anliegenden Station 1a, 1b, 1c in die Ringanschlüsse der Netzwerkschnittstelle 5 ermöglicht. Umgekehrt werden die aus dem Netz am Empfangsringanschluß der Netzwerkschnittstelle 5 erhaltenen ATM-Zellen in Demultiplexfunktion des Multiplexers/Demultiplexers 20 wiederum den gewünschten Stationen 1a,1b,1c zugeordnet. Auf diese Weise wird die Netzwerkschnittstelle 5 mit einem sog. Port Extender ausgerüstet, an den seiner Portzahl entsprechend mehrere Stationen 1a, 1b, 1c anschließbar sind. Der in Fig. 3 dargestellte Port Extender für die Netzwerkschnittstelle 5 ist in gleicher Weise auch realisierbar für jede andere der dargestellten Netzwerkschnittstellen. Auch ist die Vielfachheit eines jeden Port Extenders prinzipiell nicht begrenzt.

Ausgehend von den in den Figuren 1 bis 3 dargestellten prinzipiellen Aufbauweisen eines lokalen ATM-Netzwerkes wird die prinzipielle Funktion der erfindungsgemäßen Lösung im folgenden erläutert:

Fig. 4a zeigt prinzipiell den Aufbau einer ATM-Zelle gemäß Standard, welche aus insgesamt 53 Bytes besteht, wobei 48 Bytes für die Übertragung der Information (payload) und 5 Bytes für die Steuerung der Übertragung in Form von Header-Daten vorgesehen sind. Diese 5 Bytes bilden den sog. Zellenkopf (header).

Fig. 4b zeigt die gemäß Standardisierung vorgesehene Strukur des Zellenkopfes für eine Zelle, die von einer Station (user) zum Netzwerk (network) übertragen wird. Dieser Standard wird als UNI (user network interface) bezeichnet. Dabei werden die ersten 4 Bit durch die GFC-Funktion (generic flow control) gebildet, die zur Verhinderung des Entstehens von Überlastsituationen im Netz dienen. Die nachfolgenden 8 Bit dienen der Definition des virtuellen Pfades (VPI), während die daran anschließenden folgenden 16 Bit für die Definition des virtuellen Kanals (VCI) vorgesehen sind. Weitere Bit im Header sind vorgesehen für die Kennzeichnung der Zellenart (PT, payload type), die Zellenverlustpriorität (CLP, cell loss priority) und die Zellenkopfprüfsumme (HEC, header error control).

Fig. 4c zeigt demgegenüber den Aufbau des Zellenkopfes für den Fall, daß die ATM-Zelle über eine Netzwerk-Netzwerkschnittstelle (NNI, network network interface) von einem lokalen ATM-Netzwerk zu einem anderen übertragen werden soll, (vergl. beispielsweise Fig. 2). Für den NNI Standard werden die ersten 4 Bit, die bei der UNI Zelle für die GFC-Funktion reserviert sind, dem VPI-Bereich zugeschlagen, so daß der gesamte für VPI&VCI zur Verfügung stehende Bereich eine Länge von z.B. 28 Bit erhält.

In Fig. 4d ist nun prinzipiell der Aufbau einer ATM-Zelle dargestellt, wie er durch die Umsetzung vom UNI/NNI Standard in den netzwerkspezifischen Standard erhalten wird. Zunächst ist davon auszugehen, daß die Bereiche PT, CLP und HEC des Zellenkopfes gegenüber dem standardisierten Format unverändert bleiben.

Innerhalb des für VPI&VCI reservierten Header-Bereichs, der beispielsweise 28 Bit umfaßt, befindet sich ein bei der standardisierten Nutzung nicht belegter Bereich von beispielsweise 16 Bit, da 10 Bit für die VPI&VCI Informationen beim Aufbau von 1024 Verbindungen ausreichen. Der verbleibende Bitbereich ist nach UNI/NNI Standard zu Null gesetzt.

Erfindungsgemäß wird nun dieser Bitbereich (vgl. Fig. 4d) für die netzwerkspezifische (ringinterne) Kennung verwendet, d.h. die freien Bit überschrieben.

Die Kennung besteht dabei aus einem ersten Abschnitt I (UMB), in dem die Information abgelegt ist, ob es sich um eine Unicast-, um eine Multicast- oder um eine Broadcast-Verbindung handelt. Der weitere Teilbereich II (DEST-ID) beinhaltet im wesentlichen die Adressinformation für die ATM-Zelle. Hierauf wird im Detail weiter unten noch eingegangen. Schließlich ist ein anderer Abschnitt III (CP) für Pioritätsangaben bzw. für die Zellenart reserviert.

Der gemäß Fig. 4d modifizierte Header-Bereich weist somit die entsprechenden VPI&VCI Bereiche auf wie auch der ursprüngliche. Der verbleibende gemäß Standard nicht genutzte Bereich der Bitfolge kann jedoch frei wählbar programmiert werden. Die Umsetzung des Headers vom UNI/NNI Format in die ringspezifische Header-Struktur erfolgt beim Eintritt der Zelle in die Netzwerkschnittstelle. Dabei werden folgende Schritte durchgeführt:
1. Die im Header vorhandenen VPI&VCI Bit gemäß UNI/NNI Standard werden erfaßt und damit eine in der Netzwerkschnittstelle hinterlegte Zuordnungstabelle adressiert. In dieser Tabelle ist die Zuordnung zwischen der Verbindungskennung VPI&VCI und der gewünschten Zieladresse im Netzwerk hinterlegt. Die Definition dieser Tabelle erfolgt während der Signalisierungsphase, d.h. während des Gesprächsaufbaus.
2. Das neue (ringspezifische) Header-Format wird aus der Zuordnungstabelle ausgelesen und der eintreffende Zellenkopf mit diesem Format überschrieben.
3. Anhand der im überschriebenen Zellenkopf hinterlegten Information wird entschieden, ob die ATM-Zelle vom lokalen Prozessor der Netzwerkschnittstelle empfangen wird (wenn es eine hierfür gedachte Kontrollzelle ist), oder ob die Zelle in die Station zurückkehren soll oder in den Ring des Netzwerkes eintreten soll.

Wie oben beschrieben wurde, kennzeichnet der erste Teilbereich I des netzwerkspezifischen Header-Formats die Eigenschaft der Zelle, ob es sich um eine Unicast-, Multicast- oder Broadcast-Verbindungszelle handelt. Je nach Verbindungsart und weiter abhängig davon, ob eine Netzwerkschnittstelle einen Port Extender gemäß Fig.3 enthält oder nicht, ist die im weiteren Teilbereich II verwendete Zellstruktur wie folgt unterschiedlich:

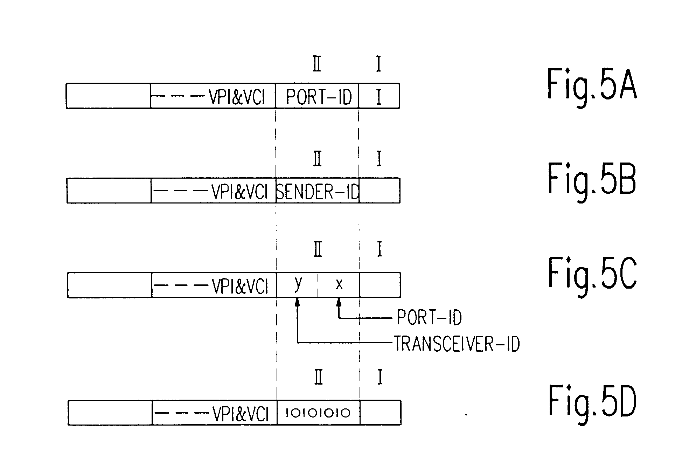

Zunächst wird gemäß Fig. 5a der Fall betrachtet, daß es sich um einen Unicastbetrieb handelt und jeder Netzwerkschnittstelle gemäß Fig. 1 und 2 genau eine Station zugeordnet ist. In diesem Fall befindet sich im Abschnitt II die Adresse derjenigen Netzwerkschnittstelle, an der die gewünschte Zielstation angeschlossen ist (Port-ID).

Fig. 5b zeigt die Zellenstruktur im Bereich II, wenn es sich im Unterschied zu Fig. 5a um einen Multicast- oder Broadcastbetrieb handelt. Dann befindet sich im Abschnitt II die Adresse derjenigen Netzwerkschnittstelle, von der die ATM-Zelle ausgesendet wird (SENDER-ID). Dies führt dazu, daß die ATM-Zelle ausgehend von der Sendestation das gesamte Netzwerk durchläuft bis sie schließlich wieder am Sender eintrifft.

In Fig. 5c ist die Struktur des weiteren Teilbereichs II der netzwerkspezifischen Kennung dargestellt, wenn im Falle des Unicastbetriebs eine Netzwerkschnittstelle gemäß Fig. 3 mit einem Port Extender ausgerüstet ist. Für diesen Fall ist eine Unterteilung vorgesehen in eine erste Bitfolge x und eine zweiten Bitfolge y. In der ersten Bitfolge x ist die Kennung abgelegt für den Anschluß-Port, an dem die gewünschte Zielstation angeschlossen ist. Demgegenüber zeigt die zweite Bitfolge y die Kennung derjenigen Netzwerkschnittstelle, an der sich der Anschluß-Port der Zielstation befindet.

Fig. 5d zeigt die Zellenstruktur im Falle eines Multicastbetriebs für eine mit einem Port Extender ausgestattete Netzwerkschnittstelle gemäß Fig. 3. Die im Abschnitt II dargestellte Bitmusterfolge berücksichtigt, welche Anschluß-Ports innerhalb einer angesprochenen Netzwerkschnittstelle für die Verbindung gewünscht werden, beispielsweise hier die Anschluß-Ports 0, 2, 4, 6, während die übrigen Anschluß-Ports 1, 3, 5, 7 an der Multicast-Verbindung nicht teilnehmen sollen.

Für den Fall, daß unter Verwendung eines Port Extenders ein Broadcastbetrieb stattfinden soll, ergibt sich prinzipiell gegenüber der in Fig. 5b dargestellten Struktur ohne Verwendung eines Port Extenders kein Unterschied. Ebenso wie gemäß Fig. 5b wird die Sender-ID als Zieladresse der ATM-Zelle verwendet, da alle innerhalb des Netzwerkes angeschlossenen Stationen in die Verbindung involviert sind.

Die detailliert Funktionsweise gemäß der erfindungsgemäßen Lösung wird im folgenden erläutert:

Dabei werden folgende Fälle unterschieden:

### 1. Unicastbetrieb ohne Port Extender

Für die Definition der Zuordnungstabelle in der Netzwerkschnittstelle ist dem Call-Handler in der Signalisierungsphase bekannt, an welcher Netzwerkschnittstelle sich diejenige Station befindet, mit der die Verbindung aufgenommen werden soll. Bei der Umsetzung der Header-Bit in der ATM-Zelle beim Übergang in die Netzwerkschnittstelle werden somit in die freien Bit im Abschnitt II die Adresse (Port-ID) derjenigen Netzwerkschnittstelle eingeschrieben, an der die Station angeschlossen ist. Wenn es sich um eine Kontrollzelle handelt, wird entsprechend das Ziel für diese Kontrollzelle in den freien Bitbereich eingeschrieben. Dabei kann es sich beispielsweise auch um eine Kontrollzelle für die CPU in derselben Netzwerkschnittstelle handeln.

Die mit der ringspezifischen Adressinformation überschriebene ATM-Zelle tritt nun in das Ringnetzwerk ein.

Wenn die Zieladresse der als nächstes erreichten Netzwerkschnittstelle nicht mit der eingeschriebenen Port-ID übereinstimmt, wird die ATM-Zelle an den Ringausgang weitergeleitet (im Falle eines bidirektionalen Ringnetzwerkes an beide Ausgänge). Wenn es sich um diejenige Netzwerkschnittstelle handelt, die mit der Port-ID übereinstimmt, wird die Zelle an den Stationsausgang weitergeleitet. Dort erfolgt die Rückübersetzung der Header-Bit in das standardisierte Format, in dem die im nicht genutzten VPI&VCI Bereich vorhandenen Bit zu Null gesetzt werden.

Eine entsprechende Betriebsart ergibt sich, wenn die Zellen in umgekehrter Richtung laufen.

### 2. Multicastbetrieb ohne Port Extender

Während der Signalisierungsphase legt der Call-Handler fest, zu welchen Netzwerkschnittstellen übertragen werden soll, d.h. welche Stationen in die Verbindung involviert sind. Dies wird in der Zuordnungstabelle berücksichtigt, mittels der das standartisierte UNI/NNI-Format in die netzwerkspezifische Header-Bitstruktur umgesetzt wird.

Aufgrund der im Bereich I der netzwerkspezifischen Kennung hinterlegten Information Multicast wird im Abschnitt II als Adresskennung für die ATM-Zelle die Adresse des Senders hinterlegt.

Während des Informationsaustauschs durchlaufen nun die mit dem ringspezifischen Header-Format versehenen ATM-Zellen das Ringnetzwerk und in jeder Netzwerkschnittstelle wird die Zelle kopiert und an den Ringausgang weitergeleitet, bis die Zelle schließlich wieder an die Sende-Netzwerkschnittstelle gelangt und dort gelöscht wird.

In jeder Netzwerkschnittstelle wird geprüft, ob die Zelle für sie bestimmt ist. Wenn dies nicht der Fall ist, wird die kopierte Zelle gelöscht. Wenn dies der Fall ist, wird die kopierte Zelle an den Ausgang der Netzwerkschnittstelle zur Station weitergeleitet.

Die Prüfung, ob die jeweilige Zelle zur Netzwerkschnittstelle gehört oder nicht, erfolgt durch die zuvor in der Signalisierungsphase festgelegte weitere Zuordnungstabelle (small broadcast/multicast table).

### 3. Broadcastbetrieb ohne Port Extender

Während der Signalisierungsphase wird festgelegt, daß zu allen der im Netzwerk befindlichen Netzwerkschnittstellen Zellen übertragen werden sollen, da jede angeschlossene Station an der Verbindung teilnimmt. Wie unter 2. wird auch hier als Adresskennung im Teilbereich II der netzwerkspezifischen Kennung die Port-ID des Senders hinterlegt, so daß auch hier die ATM-Zelle das gesamte Netzwerk durchläuft, bis sie schließlich im Sender wieder eintrifft und dort gelöscht wird.

### 4. Unicastbetrieb mit Verwendung des Port Extenders

In Erweiterung zu der unter 1. beschriebenen Verarbeitungsweise wird dem Call-Handler zunächst mitgeteilt, wie die Zuordnung der einzelnen an den Anschluß-Ports der Port Extender angeschlossenen Stationen zu den jeweiligen Netzwerkschnittstellen gestaltet ist. Hierbei handelt es sich um die systemspezifische Strukturierung, die dem Call-Handler beispielsweise in Form einer Datenbank mitgeteilt wird.

In Kenntnis dessen legt der Call-Handler während der Signalisierungsphase fest, über welche Netzwerkschnittstelle die Verbindung mit der gewünschten Zielstation ablaufen muß. Im Teilbereich II der netzwerkspezifischen Kennung sind somit nicht nur Datenbit im Bereich y für die Kennzeichnung der Netzwerkschnittstelle sondern auch Datenbit im Bereich x vorgesehen, die eine Kennung beinhalten, welcher der an der Netzwerkschnittstelle angeschlossenen Anschluß-Ports zu der gewünschten Station gehört.

Im übrigen erfolgt der Zellentransfer wie unter 1. beschrieben. Auch die Rücktransformation des netzwerkspezifischen Header-Formates in das standardisierte Format erfolgt wiederum durch Rücksetzen der Bit im Bereich x bzw. y zu Null.

### 5. Multicastbetrieb mit Verwendung eines Port Extenders

Bei dieser Betriebsart wird bei der Signalisierungsphase wiederum zunächst definiert, welche Stationen in die Verbindung involviert sind. Dem Call-Handler ist nun bekannt, zu welchen Netzwerkschnittstellen die Anschluß-Ports für die an der Verbindung zu beteiligenden Stationen gehören. Infolge dessen wird während der Signalisierungsphase in jeder Netzwerkschnittstelle ein Bitmuster festgelegt, welches kennzeichnend dafür ist, welche der Anschluß-Ports des Port Extenders ATM-Zellen erhalten sollen. Jede Netzwerkschnittstelle erhält somit abhängig von den anzusprechenden Anschluß-Ports jeweils unterschiedliche solcher Bitmuster.

Dabei wird noch während der Signalisierungsphase festgelegt, welche Netzwerkschnittstellen überhaupt in die Verbindung involviert sind, d.h. es werden diejenigen Netzwerkschnittstellen festgelegt, an denen mindestens ein Anschluß-Port für eine Station angesprochen werden muß. Hierfür wird wiederum eine Zuordnungstabelle (small broadcast/multicast table) definiert.

Im Teilbereich II der netzwerkspezifischen Kennung wird als Adresse, wie unter 2. und 3. beschrieben, wiederum die Adresse des Senders als Port-ID angegeben.

Die Übertragung der Zellen erfolgt nun wie folgt:

Jede Zelle wird vom Sender-Anschluß-Port auf die Hochgeschwindigkeitsleitung, die zur Netzwerkschnittstelle führt, geleitet und tritt von dort ins Netzwerk ein. Wenn nun die Zelle in die nächstfolgende Netzwerkschnittstelle eingetreten ist, hängt die weitere Verarbeitung davon ab, ob mindestens einer der Anschluß-Ports dieser Netzwerkschnittstelle in die Verbindung involviert ist.

Ist dies nicht der Fall, wird die Zelle an den Ringausgang weitergeleitet und tritt in die nächsten Netzwerkschnittstelle ein.

Ist anhand der Zuordnungstabelle festzustellen, daß die Zelle für mindestens einen der Anschluß-Ports dieser Netzwerkschnittstelle bestimmt ist, wird das in dieser Netzwerkschnittstelle abgelegte Bitmuster verwendet, um die Zelle weiterzuverarbeiten. Dabei werden sämtliche x+y Bit der im Bereich II vorgesehenen Datenbitfolge verwendet, so daß eine entsprechende Vielfachheit des Port Extenders berücksichtigt wird. Anhand der Bitmuster erfolgt nun eine auf den jeweiligen Anschluß-Port gerichtete Demultiplex-Behandlung der einzelnen Zellen, so daß sie zu den gewünschten in die Verbindung einbezogenen Stationen gelangen.

Die beschriebene Verarbeitungsweise erfolgt nun gleichermaßen in jeder der von der ATM-Zelle erreichten Netzwerkschnittstellen, bis die Zelle wieder in die Sendeschnittstelle gelangt und dort gelöscht wird.

### 6. Broadcastbetrieb mit Verwendung eines Port Extenders

Gegenüber der unter 5. beschriebenen Vorgehensweise ist beim Broadcastbetrieb keine spezielle Bitmusterangabe erforderlich, da mit jedem angeschlossenen Sender kommuniziert werden soll. Daher ergibt sich auch bei Verwendung eines Port Extenders diejenige Betriebsweise, wie sie unter 3. beschrieben wurde.

## Patentansprüche

1. Lokales, nach dem asynchronen Transfermodus (ATM) arbeitendes Netzwerk, insbesondere uni- oder bidirektionales Ringnetzwerk, mit mehreren Stationen (1-4) und diesen und/oder weiteren Netzwerken mit weiteren Stationen (9-11) zugeordneten Netzwerkschnittstellen (Transceiver) (5-8), die jeweils einen Sende- und Empfangs-Ringanschluß aufweisen, wobei der Verbindungsaufbau, der Informationsaustausch während der Verbindung und der Verbindungsabbau digital über den Austausch von ATM-Zellen erfolgt, in deren Kopffeld (header) logische Verbindungskennungen (VPI, virtual path identifier und VCI, virtual channel identifier) niedergelegt sind,
dadurch gekennzeichnet,
daß der mindestens einen Netzwerkschnittstelle (5) Umsetzungsmittel zugeordnet sind zum mindestens teilweisen und reversiblen Umsetzen von verfügbaren Datenbytes im Kopffeld der ATM-Zelle in eine netzwerkspezifische Kennung.

2. Lokales, nach dem asynchronen Transfermodus (ATM) arbeitendes Netzwerk nach Anspruch 1,
dadurch gekennzeichnet,
daß die Umsetzungsmittel eine während der Gesprächsaufbauphase bzw. während der Gesprächsabbauphase aktualisierte Kopffeld-Übersetzungstabelle (header translation table) beinhalten derart, daß mindestens ein Teil des nicht durch die standardisierte VPI&VCI Bitfolge belegten Kopffeldbereichs mit der netzwerkspezifischen Kennung überschreibbar ist.

3. Lokales, nach dem asynchronen Transfermodus (ATM) arbeitendes Netzwerk nach Anspruch 2,
dadurch gekennzeichnet,
daß ein erster Teilabschnitt(I) der netzwerkspezifischen Kennung eine Kennung zur Unterscheidung von Unicast-/Multicast-/ und Broadcastzellen beinhaltet.

4. Lokales, nach dem asynchronen Transfermodus (ATM) arbeitendes Netzwerk nach Anspruch 3,
dadurch gekennzeichnet,
daß ein weiterer Teilabschnitt (II) der netzwerkspezifischen Kennung der Ziel-Netzwerkschnittstelle (Destination) für die jeweilige ATM-Zelle entspricht.

5. Lokales, nach dem asynchronen Transfermodus (ATM) arbeitendes Netzwerk nach Anspruch 4,
dadurch gekennzeichnet,
daß ein anderer Teilabschnitt (III) der netzwerkspezifischen Kennung der Kontrollzellenangabe (control) und/ oder der Prioritätsangabe (priority) entspricht.

6. Lokales, nach dem asynchronen Transfermodus (ATM) arbeitendes Netzwerk nach Anspruch 1,
dadurch gekennzeichnet,
daß im Unicastbetrieb der weitere Teilbereich (II) der netzwerkspezifischen Kennung der Angabe derjenigen Netzwerkschnittstelle entspricht, an der die gewünschte Zielstation liegt (Port-ID= Ziel-ID).

7. Lokales, nach dem asynchronen Transfermodus (ATM) arbeitendes Netzwerk nach Anspruch 1,
dadurch gekennzeichnet,
daß die netzwerkspezifische Kennung im Multicast- und im Broadcastbetrieb der Angabe derjenigen Netzwerkschnittstelle entspricht, an der die Umsetzung in das netzwerkspezifische Format erfolgt ist (Port-ID=SENDER-ID).

8. Lokales, nach dem asynchronen Transfermodus (ATM) arbeitendes Netzwerk nach Anspruch 7,
dadurch gekennzeichnet,
daß eine Zuordnungstabelle (small broadcast/ multicast table) vorgesehen ist, mittels der während des Gesprächsaufbaus festgelegt wird, welche der im Netzwerk vorhandenen Netzwerkschnittstellen an der jeweiligen Verbindung teilnehmen.

9. Lokales, nach dem asynchronen Transfermodus (ATM) arbeitendes Netzwerk nach Anspruch 1,
dadurch gekennzeichnet,
daß mindestens eine Netzwerkschnittstelle (5) einen Multiplexer/Demultiplexer (20) aufweist, über welchen mindestens zwei Stationen (1a,1b,1c) gemeinsam an der Netzwerkschnittstelle (5) angeschlossen sind.

10. Lokales, nach dem asynchronen Transfermodus (ATM) arbeitendes Netzwerk nach Anspruch 9,
dadurch gekennzeichnet,
daß im Falle des Unicastbetriebs der weitere Teilbereich (II) der netzwerkspezifischen Kennung aus zwei Bitabschnitten (x,y) besteht, wobei der eine Bitabschnitt (x) zur Identifikation der jeweiligen am Multiplexer/Demultiplexer angeschlossenen Anschluß-Ports (1a,1b,1c) und der andere Bitabschnitt (y) zur Identifikation der Netzwerkschnittstelle (5) dient, für die die ATM-Zelle bestimmt ist.

11. Lokales, nach dem asynchronen Transfermodus (ATM) arbeitendes Netzwerk nach Anspruch 9,
dadurch gekennzeichnet,
daß im Falle des Multicast- oder Broadcastbetriebs der weitere Teilbereich (II) der netzwerkspezifischen Kennung die Angabe der sendenden Netzwerkschnittstelle (SENDER-ID) enthält.

12. Lokales, nach dem asynchronen Transfermodus (ATM) arbeitendes Netzwerk nach Anspruch 11,
dadurch gekennzeichnet,
daß beim Multicastbetrieb jede an der Verbindung teilnehmende Netzwerkschnittstelle (5) ein während des Gesprächsaufbaus definiertes Zuordnungsmuster (pattern) für die Auswahl der innerhalb dieser Netzwerkschnittstelle an der Verbindung teilnehmenden Anschluß-Ports aufweist, mit dem netzwerkschnittstellenintern der weitere Teil (II) der netzwerkspezifischen Kennung jeweils überschrieben wird.

13. Netzwerkschnittstelle für ein lokales, nach dem asynchronen Transfermodus (ATM) arbeitendes Netzwerk, insbesondere uni- oder bidirektionales Ringnetzwerk, zum Anschluß mindestens einer Station, wobei sie jeweils einen Sende- und Empfangs-Ringanschluß aufweist, und wobei der Datentransfer digital über den Austausch von ATM-Zellen erfolgt, in deren Kopffeld (header) logische Verbindungskennungen (VPI, virtual path identifier und VCI, virtual channel identifier) niedergelegt sind,
dadurch gekennzeichnet,
daß Umsetzungsmittel vorgesehen sind zum mindestens teilweisen und reversiblen Umsetzen von verfügbaren Datenbytes im Kopffeld der ATM-Zelle in eine netzwerkspezifische Kennung.

14. Netzwerkschnittstelle nach Anspruch 13,
dadurch gekennzeichnet,
daß ihr eine einen Port Extender bildende Multiplexer-/Demultiplexereinrichtung zugeordnet ist, über die der Datentransfer zu mehreren an Anschluß-Ports angeordneten Stationen erfolgt.

15. Lokales, nach dem asynchronen Transfermodus (ATM) arbeitendes Netzwerk, insbesondere uni- oder bidirektionales Ringnetzwerk, mit mehreren Stationen (1-4) und diesen und/oder weiteren Netzwerken mit weiteren Stationen (9-11) zugeordneten Netzwerkschnittstellen (5-8) (ATM-Transceiver), die jeweils einen Sende- und Empfangs-Ringanschluß aufweisen, wobei der Informationsaustausch digital über ATM-Zellen erfolgt, nach einem der vorhergehenden Ansprüche,
dadurch gekennzeichnet,
daß eine Vielzahl von Netzwerkschnittstellen miteinander zum Aufbau einer Vermittlungseinrichtung (Switch) gekoppelt sind.

16. ATM-Zelle zur Verwendung in einem uni- oder bidirektionalen Ringnetzwerk bestehend aus einem Kopffeld (header), in welchem eine vorgegebene Anzahl von Datenbytes für logische Verbindungskennungen (VPI, virtual path identifier und VCI, virtual channel identifier) enthalten sind, und einem Informationsfeld (payload), in dem eine weitere vorgegebene Anzahl von Datenbytes für die zu übertragene Nutzlast enthalten sind,
dadurch gekennzeichnet,
daß im Kopffeld der ATM-Zelle mindestens ein Teil von verfügbaren, nicht durch Vorgaben der Standardisierung, insbesonders für die Verbindungskennung (VPI/VCI), belegten Datenbits ringintern für eine netzwerkspezifische Kennung verwendet werden.

17. ATM-Zelle nach Anspruch 16,
dadurch gekennzeichnet,
daß die netzwerkspezifische Kennung aus einem ersten Teilbereich (I), der durch die Art der Übertragung (Unicast, Multicast, Broadcast) festgelegt ist, und aus einem weiteren Teilabschnitt (II) besteht, der den Zielort (Port-ID) der Zelle beschreibt.

18. ATM-Zelle nach Anspruch 17,
dadurch gekennzeichnet,
daß beim Unicast-Betrieb der weitere Teilbereich (II) die Adresse der der Zielstation entsprechenden Netzwerkschnittstelle enthält.

19. ATM-Zelle nach Anspruch 16,
dadurch gekennzeichnet,
daß beim Unicast-Betrieb, bei welchem einer Netzwerkschnittstelle mehrere Stationen zugeordnet sind, der weitere Teilbereich (II) eine zusätzliche Kennung (y) enthält für die Zuordnung der ATM-Zelle zum ausgewählten Anschlußport innerhalb der Netzwerkschnittstelle.

20. ATM-Zelle nach Anspruch 16,
dadurch gekennzeichnet,
daß beim Multicast/Broadcast-Betrieb der weitere Teilbereich (II) die Adresse der der Sendestation entsprechenden Netzwerkschnittstelle (SENDER-ID) enthält.
